Europäisches Patentamt

European Patent Office

Office européen des brevets

(19)

(11) Veröffentlichungsnummer: **0 054 745**
**B1**

(12) **EUROPÄISCHE PATENTSCHRIFT**

(45) Veröffentlichungstag der Patentschrift:
05.02.86

(21) Anmeldenummer: **81109645.2**

(22) Anmeldetag: **12.11.81**

(51) Int. Cl.⁴: **B 65 G 15/54**, D 21 F 1/00,
B 29 D 29/00, B 21 F 3/00

(54) **Flächiges Gliederband.**

(30) Priorität: **19.12.80 DE 3047989**

(43) Veröffentlichungstag der Anmeldung:
**30.06.82 Patentblatt 82/26**

(45) Bekanntmachung des Hinweises auf die Patenterteilung:
**05.02.86 Patentblatt 86/6**

(84) Benannte Vertragsstaaten:
**BE CH FR GB IT LI NL SE**

(56) Entgegenhaltungen:
**EP - A - 0 017 722**
**DD - A - 8 783**
**DE - A - 2 212 776**
**DE - B - 2 419 751**

(73) Patentinhaber: **Leo, Reinhard Werner, Giessener Strasse 38, D-6057 Dietzenbach (DE)**

(72) Erfinder: **Leo, Reinhard Werner, Giessener Strasse 38, D-6057 Dietzenbach (DE)**

(74) Vertreter: **Keil, Rainer A., Dipl.-Phys. Dr. et al, Patentanwälte KEIL & SCHAAFHAUSEN Ammelburgstrasse 34, D-6000 Frankfurt am Main 1 (DE)**

EP 0 054 745 B1

## Beschreibung

Die Erfindung betrifft ein flächiges Gliederband aus Drahtwendeln aus elastischem Werkstoff, z.B. thermoplastischem Kunststoff wie Polyester oder Polyamid, wobei jede Windung einer Drahtwendel einen je als Umkehrschlaufe ausgebildeten, untereinander identischen oder im wesentlichen identischen Kopfteil und Fußteil aufweist, die je einerseits mit einem ersten Schenkelabschnitt geradlinig oder im wesentlichen geradlinig in entsprechende erste Schenkelabschnitte der jeweils anschließenden Windung übergehen und je andererseits über gerade oder im wesentlichen gerade zweite Schenkelabschnitte der Windung in Verbindung stehen, wobei benachbarte Drahtwendeln mit in die ineinandergreifenden Kopfund Fußteilumkehrschlaufen eingeschobenen Steckdrähten lösbar zusammengehalten sind.

Flächige Gliederbänder aus Drahtwendeln finden beispielsweise als Transportbänder, Siebbänder od. dgl. Anwendung. Ein solches Gliederband ist bereits aus der DE-AS 24 19 751 bekannt. Bei diesem Gliederband wird zunächst ein Kunststoffdraht zu einer im Querschnitt ovalen Drahtwendel mit Null-Teilung vorgefertigt und dann mit einer gleichartigen, jedoch mit umgekehrter Drehrichtung versehenen Wendel derart verbunden, daß die ineinander geschobenen Drahtwendeln mittels ihrer Drahtdurchmesser sich gegenseitig die entsprechende größere Teilung vermitteln, wodurch aufgrund der Rückfederkraft der im Eingriff stehenden Drahtwendeln ein Kraftschluß entstehen soll. Das Zusammenfügen der Drahtwendeln bereitet deswegen erhebliche Schwierigkeiten, weil die einzelnen Windungen der Drahtwendeln erst auf den richtigen Abstand gedrückt oder gezogen und im richtigen Maß ineinander geschoben werden müssen, bevor der Steckdraht einführbar ist. Im zusammengefügten Zustand der Drahtwendeln treten Spannungszustände in dem flächigen Gliederband auf, u.a. weil die Drahtwendeln unterschiedliche Drehrichtung haben. Außerdem haben die Drahtwendeln des bekannten Gliederbandes die Neigung, sich entgegen ihrer Drehrichtung zu kräuseln, d.h. ihre Formstabilität zu verlieren. Ein weiterer Nachteil des bekannten Gliederbandes besteht darin, daß abhängig von der Dicke des verwendeten Drahtes die Durchlässigkeit des Siebbandes eine untere Grenze findet.

Der Erfindung liegt die Aufgabe zugrunde, ein flächiges Glieder- band der eingangs genannten Art zu schaffen, mit welchem ein einfaches Zusammenfügen von Drahtwendeln zu einem Gliederband hoher Engmaschigkeit erzielbar ist.

Diese Aufgabe wird erfindungsgemäß dadurch gelöst, daß die zweiten Schenkelabschnitte in Projektion auf die Ebene des Gliederbandes im wesentlichen deckungsgleich zu der nämlichen Frojektion der ersten Schenkelabschnitte und senkrecht oder im wesentlichen senkrecht zur Wendelachse verlaufen und über einen mittigen, in oder im wesentlichen in Wendelachsrichtung verlaufenden Windungsabschnitt ineinander übergehen, welcher Windungsabschnitt alleine oder im wesentlichen alleine seiner axialen Länge nach die Steigung der Drahtwendel bestimmt. Damit wird erreicht, daß die Schenkelabschnitte relativ kurz ausgebildet werden können, ohne daß dadurch die Stabilität und Formbeständigkeit des Gliederbandes leidet. Dabei stellt der mittige, in oder im wesentlichen in Wendelachsrichtung verlaufende Windungsabschnitt einen vorgegebenen Abstandshalter für die Kopf- und Fußteilumkehrschlaufen dar, wodurch ein einfaches Zusammenfügen der Drahtwendeln gewährleistet ist; der mittige Windungsabschnitt dient ferner jeweils als Anschlag für den Fußteil bzw. Kopfteil der jeweils benachbarten Drahtwendel, so daß die benachbarten Kopf- und Fußteile gerade so weit ineinander geschoben werden können, daß der Steckdraht einführbar ist; schließlich verhindert der mittige Windungsabschnitt auch die Neigung der Drahtwendeln, sich in entgegengesetzter Drehrichtung zu kräuseln. Aufgrund der Ausgestaltung der Drahtwendeln ist es ferner möglich, Drahtwendeln gleicher Drehrichtung miteinander zu einem Gliederband zu vereinigen, was den Herstellungsprozeß vereinfacht und die Vorratshaltung verringert. Andererseits können wechselweise Drahtwendeln mit linker und rechter Drehung untereinander vereinigt sein, so daß mögliche Spannungen im Gliederband ausgleichbar sind.

Die in eine Drahtwendel eingeschobene Nachbardrahtwendel kann nicht bis in den gegenüberliegenden Fußteil- bzw. Kopfteilbereich der sie aufnehmenden Drahtwendel eingeschoben werden, sondern nur etwa bis zur Hälfte der Gesamtwendelbreite. Die Durchlässigkeit des Gliederbandes kann so u.a. auch durch die Dicke des verwendeten Steckdrahtes variiert werden. Die engste Zusammenfügung der Drahtwendeln zu dem Gliederband liegt dann vor, wenn die jeweiligen Kopf- und Fußteile bis zu dem als Anschlag wirkenden mittigen Windungsabschnitt der benachbarten Drahtwendel auch im unter Zugspannung stehenden Zustand des Gliederbandes anliegen. Durch die Festlegung der Abstände der Kopfteile und Fußteile einer Drahtwendel untereinander durch den mittigen Windungsabschnitt sind diese bleibend justiert und je nach der gewünschten Durchlässigkeit des Gliederbandes vorbestimmbar. Dabei ist die axiale Länge des jeweiligen mittigen Windungsabschnittes jeweils so getroffen, daß die Kopfteile und Fußteile untereinander einen solchen Abstand voneinander haben, daß ein einfaches Zusammenfugen, allenfalls elastisches Zusammenrasten benachbarter Drahtwendeln möglich ist. Durch die genaue Einpaßbarkeit der Drahtwendeln ineinander kann ein planliegendes flächiges Gliederband geschaffen werden.

Durch die besondere Ausgestaltung der Drahtwendeln ist ferner die bisher als nachteilig angesehene Ausbildung verhältnismäßig langer und daher unerwünscht biegefreudiger Einrastglieder vermieden. Sie sind durch die Einfügung des mittigen Windungsabschnittes relativ kurz gehalten, so daß die gesamte Drahtwendel eine bessere Stabilität und Formbeständigkeit aufweist. Die Drahtwendeln bleiben auch bei einer Rückstauchung formstabil.

Durch die Anordnung deckungsgleicher oder im wesentlichen deckungsgleicher, nur etwa die halbe Breite der Drahtwendel einnehmender Einrastteile beidseitig quer zur Wendelachse entsteht bei der Zusammenfügung einer Vielzahl solcher Drahtwendeln keine unerwünschte Spreizung zwischen den Drahtwendeln, was sonst bei geringfügigen Abweichungen im Durchmesser der verwendeten Drähte zu unerwünschten unterschiedlichen Spannungen führt. Die Parallelstellung der kopfseitigen und fußseitigen Einrastteile mit jeweils vorbestimmbarer Distanz zueinander erlaubt damit eine erhebliche Vereinfachung und Einsparung bei der Herstellung des Gliederbandes, ohne daß es wegen der spannungsfreien Zusammenfügung benachbarter Drahtwendeln einer nachträglichen Thermofixierung bedarf.

Die Erfindung wird nachfolgend anhand von Ausführungsbeispielen näher erläutert, die in der Zeichnung dargestellt sind.

Es zeigen:

Fig. 1 die Ansicht einer Drahtwendel auf die Ebene eines aus solchen Drahtwendeln herstellbaren Gliederbandes.

Fig. 2 zwei Drahtwendeln gemäß Fig. 1 teilweise zusammengefügt, von hinten gesehen, und zwar eine Drahtwendel mit Linksdrehung und eine Drahtwendel mit Rechtsdrehung

Fig. 3 eine Draufsicht auf ein Gliederband aus Drahtwendeln gemäß Fig. 1, die abwechselnd Rechts- und Linksdrehung aufweisen, wobei das Gliederband an einer Stelle durch Herausnahme des Steckdrahtes aufgetrennt ist, und

Fig. 4 die Draufsicht auf ein Gliederband aus Drahtwendeln gemäß Fig. 1, die alle gleichen Drehsinn aufweisen.

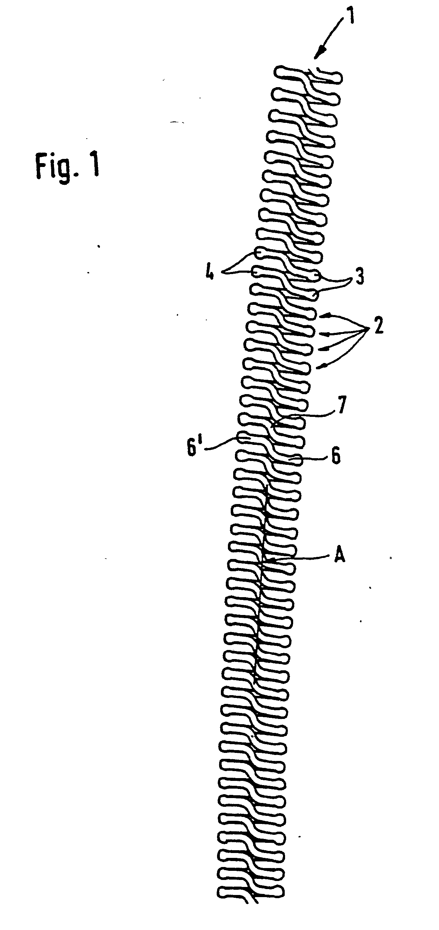

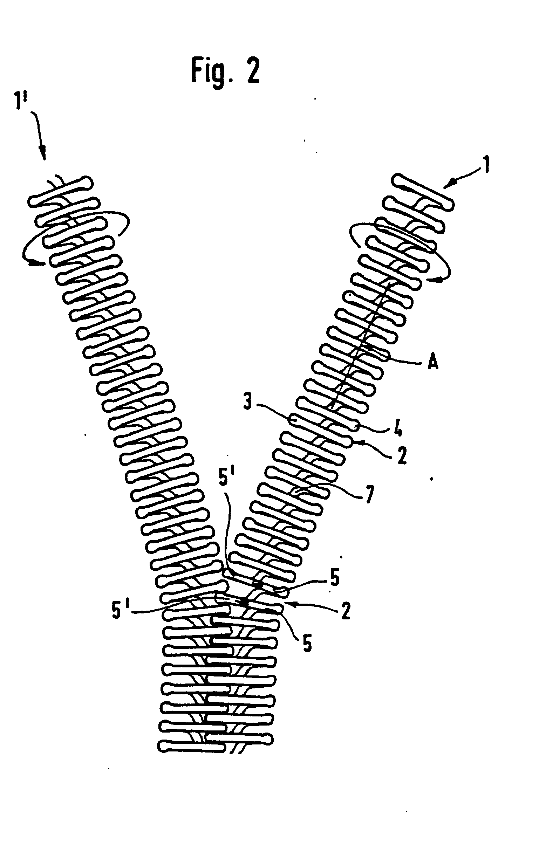

Die Drahtwendel 1 nach Fig. 1 und 2 besteht aus einzelnen Windungen 2. Die Erstreckung einer solchen Windung 2 ist in Fig. 2 durch kleine Pfeile angedeutet. Jede Windung 2 hat, wie aus Fig. 1 am besten ersichtlich, je einen als Umkehrschlaufe ausgebildeten Kopfteil 3 und einen als gegenüberliegende Umkehrschleife ausgebildeten Fußteil 4. Wie aus Fig. 2 am besten ersichtlich, geht der jeweilige Fußteil 4 je einerseits mit einem ersten Schenkelabschnitt 5 geradlinig oder im wesentlichen geradlinig in einen entsprechenden ersten Schenkelabschnitt 5′ der jeweils anschließenden Windung 2 über. Auf der anderen Seite, wie dies am besten aus Fig. 1 ersichtlich ist, schließen sich an Kopfteil 3 und Fußteil 4 je zweite gerade oder im wesentlichen gerade zweite Schenkelabschnitte 6 bzw. 6′ an. Die zweiten Schenkelabschnitte 6, 6′ verlaufen in Projektion auf die Ebene des Gliederbandes im wesentlichen deckungsgleich zu der nämlichen Projektion der ersten Schenkelabschnitte 5′ bzw. 5 und senkrecht oder im wesentlichen senkrecht zu der Wendelachse A. Die zweiten Schenkelabschnitte 6, 6′ gehen ferner über einen mittigen, in oder im wesentlichen in Wendelachsrichtung verlaufenden Windungsabschnitt 7 ineinander über. Dieser jeweilige Windungsabschnitt 7 bestimmt alleine oder im wesentlichen alleine seiner axialen Länge nach die Steigung der Drahtwendeln 1 bzw. 1′. Aus der bildlichen Darstellung geht auch hervor, daß die einzelnen Windungen 2 an ihren Umkehrschlaufen, die den jeweiligen Kopfteil 3 bzw. Fußteil 4 bilden, etwas gegenüber der sonstigen Drahtstärke verdickt sein können, so daß ein leichtes Einrasten benachbarter Drahtwendeln 1 bzw. 1′ ineinander stattfindet, wonach dann der entsprechende Steckdraht durch den von den Umkehrschlaufen gebildeten Kanal gesteckt werden kann. Der mittige Windungsabschnitt 7 ist seiner axialen Länge nach gerade so bemessen, daß diese etwas verdickten Umkehrschlaufen in dem teilungsbedingten Zwischenraum der benachbarten Drahtwendel 1, 1′ Platz finden, ohne daß die Drahtwendel 1, 1′ einer Längsspannung ausgesetzt wird.

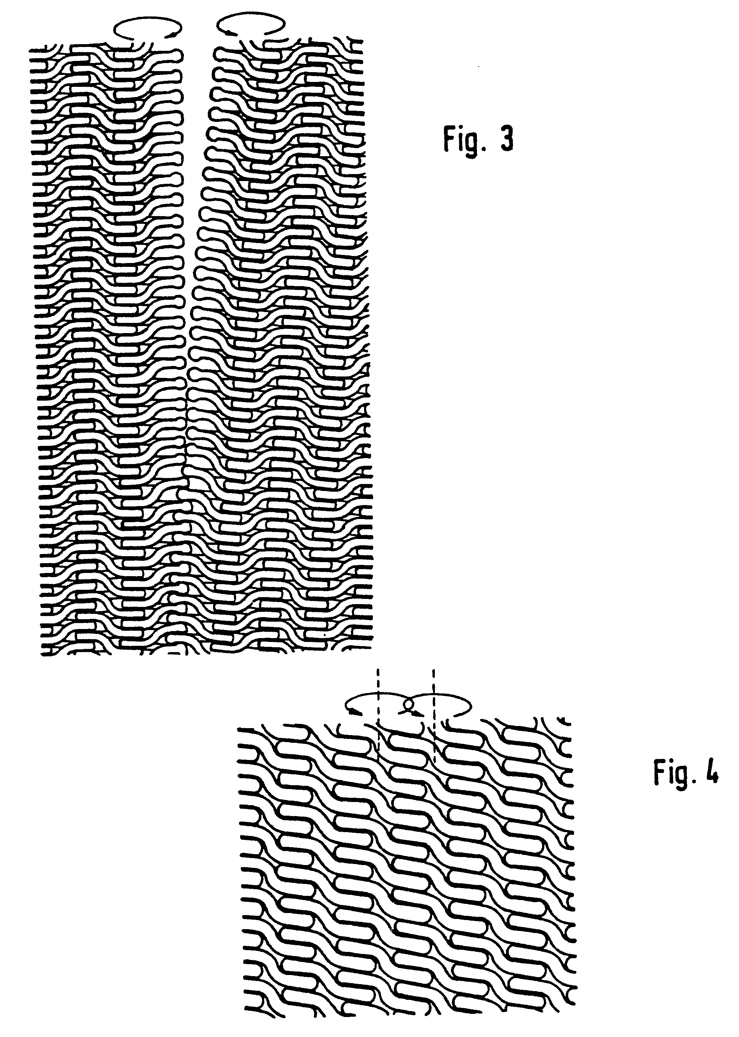

Während bei den in den Fig. 3 und 4 dargestellten Gliederbändern jeweils die Vorderseite der in Wendelachsrichtung gesehen einen im wesentlichen flachen länglichen Querschnitt aufweisenden Drahtwendeln 1, 1′, also diejenige Seite der Drahtwendeln, die die mittigen Windungsabschnitte 7 aufweisen, ein und derselben Seite des Gliederbandes zugewandt ist, ist auch ein Gliederband möglich, bei welchem benachbarte Drahtwendeln 1 1′ beispielsweise wechselweise den mittigen Windungsabschnitt 7 auf der Vorderseite und auf der Rückseite des Gliederbandes haben.

**Bezugszeichenliste:**

1, 1′ Drahtwendeln
2 Windungen
3 Kopfteil
4 Fußteil
5, 5′ erste Schenkelabschnitte
6, 6′ zweite Schenkelabschnitte
7 Windungsabschnitt

**Patentanspruch**

Flächiges Gliederband aus Drahtwendeln (1, 1′) aus elastischem Werkstoff, z.B. thermoplastischem Kunststoff wie Polyester oder Polyamid, wobei jede Windung einer Drahtwendel (1, 1′) einen je als Umkehrschlaufe ausgebildeten, untereinander identischen oder im wesentlichen identischen Kopfteil (3) und Fußteil (4) aufweist, die je einerseits mit einem ersten Schenkelabschnitt (5, 5′) geradlinig oder im wesentlichen geradlinig in entsprechende erste Schenkelabschnitte (5, 5′) der jeweils anschließenden Windung übergehen und je andererseits über gerade oder im wesentlichen gerade zweite Schenkelabschnitte (6, 6') der Windung in Verbindung stehen, und wobei benachbarte Drahtwendeln (1, 1') mit in die ineinandergreifenden Kopf- und Fußteilumkehrschlaufen eingeschobenen Steckdrähten lösbar zusammengehalten sind, dadurch gekennzeichnet, daß die zweiten Schenkelabschnitte (6, 6') in Projektion auf die Ebene des Gliederbandes im wesentlichen deckungsgleich zu der nämlichen Projektion der ersten Schenkelabschnitte (5, 5') und senkrecht oder im wesentlichen senkrecht zur Wendelachse (A) verlaufen und über einen mittigen, in oder im wesentlichen in Wendelachsrichtung verlaufenden Windungsabschnitt (7) ineinander übergehen, welcher Windungsabschnitt (7) alleine oder im wesentlichen alleine seiner axialen Länge nach die Steigung der Drahtwendel (1, 1') bestimmt.

## Claim

A flat articulated belt of wire spirals (1,1') of flexible material, e.g. thermoplastic material, such as polyester or polyamide, with each coiling of a wire spiral (1,1') comprising a head portion (3) and a base portion (4) each formed as a reversing loop and being of an identical or substantially identical configuration, with each of them, on the one hand, with a first leg section (5,5'), passing over rectilinerarly or in a substantially rectilinear manner into corresponding first leg sections (5,5') of the respectively following coiling and with each of them, on the other hand, being in communication, via straight-lined or substantially straight-lined second leg sections (6,6') of the coiling, and with neighboring wire spirals (1,1') being detachably held together by plug-wires inserted into the engaging loops of the head and base sections, characterized in that the second leg sections (6,6'),projected upon the plane of the articulated belt, extend substantially concurrently with the corresponding projection of the first leg sections (5,5') and normal or substantially normal to the spiral axis (A) and, via a central coiling section (7) extending in the direction of the spiral axis or substantially in the direction thereof, pass over one into the other, which coiling section (7) alone or substantially alone determining, by its axial length, the pitch of the wire spirals (1,1').

## Revendication

Bande articulée plane composée des hélices en fils (1,1') de matière élastique, par exemple, de matière theremoplastique, notamment polyester ou polyamide, chaque enroulement d'une hélice en fils (1,1') comportant une section de tête (3) et une section de pieds (4) chacune formée comme lacet réversible d'une configuration identique ou essentiellement identique et chacune passant, d'une part, avec une section de branche (5,5') première dans une manière rectiligne ou essentiellement rectiligne dans des sections de branche premières (5,5') correspondes de l'enroulement suivant respectivement, et chacune, d'autre part, par l'intermédiaire de sections de branches (6,6') deuxièmes de l'enroulement rectilignes ou essentiellement rectilignes êtant en communication, et des hélices en fils (1,1') voisines êtant maintenues amoviblement par l'intermédiaires de fils enfichables introduits dans les lacets réversibles des sections de tête et de pieds s'enchainant, caractérisé en ce que les deuxièmes sections de branche (6,6') en projection sur le plan de la bande articulée s'étendent essentiellement concouramment avec la projection des premières sections de branche (5,5') et dans une manière perpendiculaire ou essentiellement perpendiculaire à l'axe (A) d'hélice et, par l'intermédiaire d'une section d'enroulement (7) centrique s'étendant dans ou essentiellement dans la direction d'hélice, passant l'un à l'autre, laquelle section (7) définant seule ou essentiellement seule, par sa longueur axial, le pas de l'hélice en fils (1,1').

Fig. 1

0 054 745

# Fig. 2

Fig. 3

Fig. 4